# DEMANDE DE BREVET EUROPEEN

(11) **EP 3 101 445 A1**
(43) Date de publication de la demande: **07.12.2016**
(21) Numéro de dépôt: 16170922.5
(22) Date de dépôt: 23.05.2016
(51) Int. Cl.: G01S 19/37, G01S 19/24, G01S 19/22

(54) **RÉCEPTEUR GNSS ÉVOLUTIF**

(30) Priorité: 01.06.2015 FR 1554932
(71) Demandeur: CENTRE NATIONAL D'ETUDES SPATIALES, 75001 Paris (FR); M3 Systems, 31410 Lavernose-Lacasse (FR)
(72) Inventeur: RIES, Lionel, 81290 Vivier les Montagnes (FR); POLLINA, Marc, 31410 Saint Hilaire (FR); VIGNEAU, Willy, 31600 Muret (FR)
(74) Mandataire: Pronovem

(57) **Abrégé**

Un récepteur GNSS (10) implémente des modules de traitement de signaux GNSS (16, 18, 20, 24, 26, 28), parmi lesquels figurent, au moins, un module d'acquisition et de poursuite (28) et un module de navigation (24). Un module de supervision (36) alloue des ressources logicielles et/ou matérielles (34) aux modules de traitement de signaux. Le module de supervision possède une configuration de base garantissant un fonctionnement de base (ou nominal) du récepteur GNSS du fait de l'allocation des ressources aux différents modules de traitement de signaux selon cette configuration.

La modularité de l'architecture proposée facilite l'évolution des fonctionnalités de récepteurs GNSS. La certification des évolutions est mieux maîtrisable.

L'invention sera d'intérêt pour tous les fabricants de récepteurs GNSS.

## Description

### Domaine Technique

De manière générale, l'invention concerne un récepteur de signaux de radionavigation, appelé également récepteur GNSS (acronyme du terme anglais « global navigation satellite system », système mondial de positionnement par satellites), d'une nouvelle conception.

### Arrière-plan technologique

Les signaux de radionavigation (« signaux GNSS ») émis par les émetteurs d'un système de positionnement (des satellites ou des pseudolites) se présentent sous la forme d'une porteuse modulée par une forme d'onde d'étalement contenant un code binaire pseudo-aléatoire. La modulation de la porteuse provoquant l'étalement du spectre autour de la fréquence de la porteuse, les signaux GNSS sont souvent appelés « en spectre étalé ». Chaque code pseudo-aléatoire constitue un identificateur du signal et de son émetteur. Connus des récepteurs, les codes pseudo-aléatoires permettent à ceux-ci un Accès Multiple à Répartition de Code (AMRC). Hormis les signaux « pilotes », les signaux GNSS transportent en outre des données (p. ex. le message de navigation) sous forme d'une séquence binaire (à rythme nettement moins élevé que le code pseudo-aléatoire) modulée en plus sur la porteuse.

La réception d'un signal GNSS comprend sa démodulation à l'aide d'une réplique de la porteuse générée dans le récepteur par un oscillateur piloté par une boucle de poursuite de porteuse (ou boucle de poursuite de phase) et d'une réplique de la forme d'onde d'étalement (ou réplique de code) produite par un générateur de forme d'onde piloté par une boucle de poursuite de code. Le signal d'écart de phase entre la porteuse du signal entrant et la réplique de porteuse produit à chaque pas de temps fournit une première observable (l'observable d'erreur de phase de porteuse). Le signal de décalage temporel entre la forme d'onde d'étalement du signal entrant et la réplique de code produit à chaque pas de temps représente une deuxième observable (l'observable d'erreur de phase de code). Les observable de phase et de code sont ensuite utilisées pour estimer la pseudo-distance et, dans certains types de récepteurs, la delta-distance (en anglais « delta range »). Les étapes sont réalisées en parallèle sur les différents canaux du récepteur pour les différents signaux. L'ensemble des pseudo-distances sont ensuite entrées dans une entité fonctionnelle appelée « navigateur », qui les combine et en déduit la solution de navigation ou de positionnement, qui comprend une estimation de la position ainsi que du temps, et, habituellement, une estimation de la vitesse.

L'architecture classique d'un récepteur comprend un étage de tête RF (en anglais « RF front end »), connecté à l'antenne, qui reçoit les signaux GNSS dans la bande de transmission, les transpose en fréquence (en bande de base ou vers une fréquence intermédiaire) et les convertit en format numérique. Le deuxième étage de traitement est l'étage d'acquisition et de poursuite. Il comprend plusieurs canaux, chaque canal permettant d'acquérir ou de poursuivre un signal GNSS d'un émetteur particulier à la fois. Chaque canal comporte des corrélateurs, dans lesquels le signal entrant est mélangé avec les répliques de porteuse et de code et intégré dans le temps. Dans une architecture typique, chaque canal dispose d'un corrélateur « en avance » (ou « E » pour « early »), d'un corrélateur « prompt » (ou « P ») et d'un corrélateur « en retard » (ou « L » pour « late »), chaque corrélateur comprenant une voie « en phase » (ou « I ») et une voie « en quadrature de phase » (ou « Q »). Les résultats des corrélations (I_{E}, Q_{E}, Ip, Qp, IL et Q_{L}) sont amenés aux discriminateurs, qui produisent des signaux d'erreur correspondant au décalage entre la réplique de code et le signal entrant, respectivement à la différence de phase entre la réplique de porteuse et le signal entrant. Les signaux d'erreur servent, après filtrage, à synchroniser les répliques de code et de phase par les boucles de poursuite respectives. En aval des discriminateurs se trouve un étage de traitement (appelé « estimateur » dans la suite) chargé entre autres de la démodulation et de l'extraction des données. Il décode le message de navigation et calcule les pseudo-distances en tenant compte des signaux d'erreur et de l'horodatage du message de navigation. En aval des estimateurs des différents canaux d'acquisition et de poursuite se trouve le navigateur. Celui-ci reçoit les pseudo-distances et, le cas échéant, les delta-distances, de tous les canaux et en déduit la position actuelle et le temps du récepteur. Habituellement, la vitesse est également estimée. Typiquement, le navigateur utilise un filtre de Kalman étendu. Le navigateur met la solution de navigation à disposition d'applications, comme, par exemple, un logiciel de cartographie et/ou de guidage.

Dans une architecture classique, les différentes entités de traitement de signal entre l'étage RF et le navigateur sont hautement intégrées afin de garantir que les opérations de traitement des signaux soient exécutées à la vitesse requise pour la mise à disposition de la solution de navigation en temps réel. Cela implique, notamment, que toutes les manipulations et calculs intermédiaires réalisés sur les signaux GNSS sont, en principe, inaccessibles et donc inexploitables. Tout au plus, un récepteur classique mettra à disposition des informations rudimentaires sur l'état de santé de ses modules. Le fonctionnement du récepteur en tant que « boîte noire » a comme inconvénient qu'il est difficile de proposer des perfectionnements. Tout changement, même infime en principe, nécessitera une adaptation ou au moins une vérification de l'architecture complète du récepteur. La validation des changements devra en plus être réalisée sur un prototype assez complet et complexe du fait du haut degré d'intégration. Dès lors, l'évolution technologique d'un récepteur est inhibée par les architectures actuelles.

### Problème technique

Un objectif de la présente invention est de proposer un récepteur GNSS d'une conception nouvelle, plus propice à l'évolution technologique.

### Description générale de l'invention

Selon un premier aspect de l'invention, un récepteur GNSS implémente, sur une plateforme matérielle (en anglais « hardware platform »), des modules de traitement de signaux GNSS, parmi lesquels figurent, au moins :
∘ un module d'acquisition et de poursuite configuré pour l'acquisition et la poursuite de signaux GNSS, ainsi que pour la détermination de pseudo-distances à partir des signaux GNSS poursuivis ; et
∘ un module de navigation configuré pour déterminer une solution de navigation sur la base au moins des pseudo-distances déterminées.

Le récepteur comprend en outre un module de supervision, configuré pour allouer des ressources logicielles et/ou matérielles aux différents modules de traitement de signaux. Le module de supervision possède une configuration de base garantissant un fonctionnement de base (ou nominal) du récepteur GNSS du fait de l'allocation des ressources aux différents modules de traitement de signaux selon cette configuration. En d'autres mots, dans sa configuration de base, le module de supervision alloue les ressources aux différents modules de traitement de signaux selon des critères définis garantissant le fonctionnement de base du récepteur GNSS.

Il est donc proposé une architecture modulaire, ayant une hiérarchie d'au moins deux types de modules. Le module de supervision est hiérarchiquement supérieur aux modules de traitement de signaux GNSS et aux autres modules éventuellement implémentés sur la plateforme matérielle. De préférence, chaque module de la couche inférieure comprend une interface de communication (p.ex. un ou plusieurs ports matériels ou logiciels) pour l'entrée et la sortie de données. De préférence, toutefois, le module de supervision contrôle l'utilisation des interfaces de communication, en particulier les droits d'accès et les droits d'émettre.

De préférence, le récepteur GNSS est réalisé en tant que système embarqué ou fait partie d'un tel système.

Dans le contexte du présent document, on entend par « module » une entité matérielle et/ou logicielle qui est dédiée à l'exécution d'une fonction définie dans le cadre du récepteur. S'il s'agit d'un module logiciel, un processus correspondant au module est exécuté dans une partition dédiée de la mémoire et/ou du processeur de la plateforme matérielle. Le module de supervision est de préférence exécuté dans une partition système permettant de gérer l'état de la plateforme matérielle et des partitions normales dans lesquelles sont exécutés les modules de la ou des couches inférieures. Il convient de noter qu'un module peut être constitué de plusieurs sous-modules ou modules élémentaires qui coopèrent pour réaliser la fonction. La notion de module n'est pas limitée, dans ce document, à de tels modules élémentaires. On note, dans ce contexte, qu'une certaine granularité du système est souhaitable afin de rendre accessibles des données intermédiaires, via les interfaces de communication des modules.

Les ressources allouées par le module de supervision peuvent comprendre des temps de calculs, des priorités d'exécution, des puissances de calculs, des ressources de mémoire et/ou des ressources de communication.

Le fonctionnement de base peut être un fonctionnement certifié (c.-à-d. ayant des performances garanties dans des conditions de test définies). Notamment en cas de détérioration des performances, le module de supervision peut réaliser une réallocation des ressources entre les différents modules afin que le fonctionnement de base et, par conséquent, les performances certifiées, soit garanti. Par exemple, le module de supervision pourrait être configuré pour commuter entre une boucle de poursuite vectorielle et une boucle de poursuite scalaire sur la base des performances que chaque boucle peut fournir dans une situation donnée. Le module de supervision pourrait également être configuré pour commuter entre un navigateur utilisant un filtre Kalman ou Kalman étendu et un navigateur utilisant un filtre de type « moindre carré ».

De préférence, les ressources de la plateforme matérielle sont dimensionnées de sorte à permettre l'exécution de processus non requis pour le fonctionnement de base, en particulier dans les conditions de certification. En d'autres mots, il existe une marge de ressources qui peuvent être utilisées par des processus qui n'interviennent pas dans le fonctionnement de base. De tels processus peuvent appartenir à des modules en cours de développement ou de validation/certification. Il peut s'agir de processus qui pourraient un jour remplacer un processus faisant partie du fonctionnement de base, de processus de diagnostic, de processus élargissant les fonctions du récepteur, de processus réalisant une interface vers du matériel périphérique, etc. Si le fonctionnement de base avait besoin de davantage de ressources dans des conditions exceptionnelles, le module de supervision peut allouer la marge de ressources existante aux processus contribuant au fonctionnement de base, si nécessaire en enlevant des ressources aux processus qui ne contribuent pas au fonctionnement de base.

Dans le contexte du présent document, le terme « processus » désigne de manière générale, une instance d'un programme en cours d'exécution.

De préférence, les modules de traitement de signaux ou les modules de la couche inférieure en général comprennent au moins un module accessoire n'intervenant pas dans le fonctionnement de base. De tels modules peuvent intervenir dans des modes de fonctionnement « avancés » qui incluent le fonctionnement de base ou dans des modes de fonctionnement de test, de prototypage, etc. dans lesquels le fonctionnement de base est désactivé. Pour désactiver le fonctionnement de base, il est nécessaire de placer le module de supervision dans une configuration autre que la configuration de base.

De préférence, au moins un des modules de traitement de signaux est configuré pour mettre à disposition de l'au moins un module accessoire des résultats de calculs ou d'autres données intermédiaires si cette mise à disposition est demandée, autorisée ou au moins non interdite par le module de supervision. Il y a différentes conceptions possibles pour le module de supervision. Par exemple, selon une conception libérale, le module de supervision garde les contraintes (en termes d'accès aux ressources) sur les modules de la couche inférieure relâchées et les resserre au cas où le fonctionnement de base du récepteur risque d'être mis en péril. Selon une conception restrictive, le module de supervision permet l'accès aux ressources dans la mesure des besoins du fonctionnement normal, tout autre accès aux ressources par les modules de la couche inférieure devant être explicitement autorisé.

Le module de supervision est de préférence configuré, au moins dans la configuration de base, pour suspendre ou tuer un processus exécuté par un module accessoire si ce processus met en péril le fonctionnement de base du récepteur.

Le module de supervision peut être un hyperviseur et/ou un système d'exploitation temps réel (en anglais « real-time operating system », RTOS). Le module de supervision peut mettre en oeuvre un ou plusieurs processus gardiens qui assurent la gestion de la mémoire, la gestion de la communication entre les modules de la couche inférieure (communication inter-partitions), la surveillance et le suivi des processus. Le module de supervision surveille en particulier l'état d'exécution des différents processus et peut les relancer en cas de problème. Avantageusement, le module de supervision peut même avoir des capacités de débogage. Le module de supervision peut également contrôler de l'état de la mémoire partagée, p.ex. à l'aide de codes de redondance cyclique à la fin de chaque segment, pour éviter des problèmes résultants d'une corruption de mémoire. De préférence, le module de supervision met en oeuvre des algorithmes de résolution d'interblocages, d'analyse de sémaphores et/ou d'exclusions mutuelles, des « chiens de garde » (en anglais « watchdogs »), ou d'autres mesures pour surveiller le bon fonctionnement du récepteur GNSS. De préférence, le module de supervision est un hyperviseur natif (en anglais « bare-metal »), plus adapté aux applications en temps réel qu'un hyperviseur invité (en anglais « hosted »).

Les modules de traitement de signaux peuvent être des modules logiciels et/ou matériels.

Un récepteur GNSS selon l'invention comprend, de préférence, un étage RF pour transposer en fréquence et numériser une bande de fréquences comprenant les signaux GNSS à exploiter. L'étage RF est avantageusement piloté sous le contrôle du module de supervision. L'étage RF peut être considéré comme un périphérique au moins en partie matériel. Tous les sous-modules de l'étage RF en aval du convertisseur analogique-numérique (CAN), p.ex. des filtres, peuvent être conçus comme modules logiciels ou matériels.

De préférence, le module de supervision est configuré de sorte à permettre que la configuration de base du module de supervision soit temporairement remplacée par une configuration autorisant une allocation des ressources plus libérale que la configuration de base.

Selon un mode de réalisation préféré de l'invention, la configuration de base est protégée contre la modification. De préférence, les modules de traitement de signaux intervenant dans le fonctionnement de base sont également protégés contre la modification. Une telle protection peut être mise en oeuvre par des moyens cryptographiques, p.ex. des signatures cryptographiques du programme de chaque module, par un périmètre de sécurité physique, par le stockage dans une mémoire morte (avec une protection forte contre la reprogrammation), etc.

De préférence, le module d'acquisition et de poursuite est configuré pour poursuivre les signaux GNSS en mode scalaire et, selon un mode de réalisation avantageux de l'invention, les modules de traitement des signaux prennent un module de poursuite accessoire configuré pour poursuivre les signaux GNSS en mode vectoriel. Dans le cas d'une poursuite scalaire, la navigation (détermination de la position, de la vitesse et du temps) intervient en aval de la poursuite des signaux et les boucles de poursuite de code et/ou de porteuse des différents canaux de poursuite sont indépendantes entre elles. Dans une poursuite vectorielle, la solution de positionnement du navigateur est utilisée dans les boucles de poursuite. En d'autres termes, les répliques de code ou de phase sont synchronisées avec le signal entrant sur la base de la solution de positionnement du navigateur : la navigation fait partie intégrante de la poursuite. Des explications sur le fonctionnement d'une boucle de poursuite de code vectorielle peuvent, p.ex., être trouvées dans l'article « Vector Delay Lock Loops », Matthew Lashley et al., InsideGNSS, septembre/octobre 2012, pp. 28-34.

La modularité de l'architecture proposée permet de faire évoluer les fonctionnalités du récepteur GNSS. Dans ce cadre évolutif, pour ajouter un nouveau module ou remplacer un module existant du récepteur par un nouveau module, il suffira de lui programmer une interface avec le module de supervision. L'ajout ou le remplacement d'un module peuvent être réalisés avec un minimum d'impact sur les autres modules et sur le fonctionnement du récepteur en tant qu'ensemble.

La structuration du récepteur en modules facilite la certification des évolutions du récepteur. Une analyse module par module est possible, ce qui permet d'organiser les étapes de certification et de maîtriser la complexité du système. Au niveau du système, il est possible d'analyser comment les différents modules interagissent sous le contrôle du module de supervision, en faisant abstraction de la vie intérieure de chaque module.

### Brève description des dessins

D'autres particularités et caractéristiques de l'invention ressortiront de la description détaillée de certains modes de réalisation avantageux présentés ci-dessous, à titre d'illustration, avec référence aux dessins annexés qui montrent :
Fig. 1: un schéma de principe d'un récepteur GNSS selon un premier mode de réalisation de 'invention ;
Fig. 2: un schéma de principe d'un récepteur GNSS selon un deuxième mode de réalisation de l'invention ;
Fig. 3: un schéma de principe d'une évolution du récepteur GNSS de la figure 2 avec une centrale inertielle et un navigateur hybride;
Fig. 4: un schéma de principe d'une autre évolution du récepteur GNSS de la figure 2 avec un module de navigation et de poursuite vectorielle.

### Description détaillée de modes de réalisation avantageux de l'invention

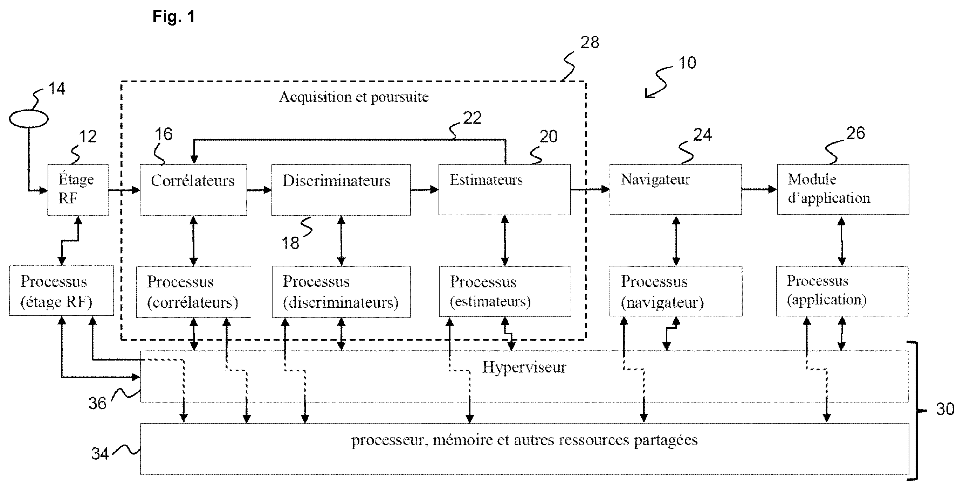

Un récepteur GNSS 10 selon un premier mode de réalisation de l'invention est montré sur la figure 1. Le récepteur 10 comprend un étage RF 12, connecté à une antenne 14. L'étage RF 12 a comme fonction principale de transposer le signal analogique entrant en fréquence et de le convertir en un signal numérique. En outre l'étage RF 12 amplifie et filtre le signal entrant. Le signal numérisé est ensuite entré dans plusieurs canaux d'acquisition et de poursuite, dont chacun sert à acquérir et à poursuivre un signal GNSS en provenance d'un émetteur (satellite ou pseudolite) particulier. Chaque canal d'acquisition et de poursuite comprend un ensemble de corrélateurs 16, qui corrèlent le signal entrant avec des répliques internes du signal de radionavigation à acquérir ou à poursuivre. Les résultats des corrélations sont combinés dans des discriminateurs 18, qui fournissent un premier signal d'erreur indiquant le décalage entre le code d'étalement du signal entrant et la réplique de code interne et un deuxième signal d'erreur indiquant la différence de phase entre la porteuse du signal entrant et la réplique de porteuse interne. Après filtrage, effectué par des estimateurs 20 dans l'exemple illustré, ces signaux d'erreur sont utilisés dans les boucles de poursuite de code et de porteuse 22 pour synchroniser les répliques locales avec le signal GNSS à poursuivre. Les estimateurs 20 calculent également les pseudo-distances et les valeurs du décalage Doppler, qui sont collectées pour tous les canaux dans le navigateur 24. Celui-ci estime sur cette base la solution de navigation, qui comprend typiquement la position, la vitesse et le temps du récepteur GNSS 10. La solution de navigation est mise à disposition d'un module d'application 26, par exemple pour le calcul d'itinéraires et l'affichage sur une carte.

Dans le mode de réalisation du récepteur GNSS 10 illustré sur la figure 1, les modules de traitement de signaux GNSS, à savoir le module de corrélation 16, le module de discrimination 18, le module d'estimation 20, le module de navigation 24 et le module d'application 26 comprennent des composantes matérielles privatives dédiées à la réalisation de la fonction respective. De telles composantes matérielles peuvent être des circuits intégrés, des circuits logiques programmables (en anglais « programmable logic device »), des réseaux de portes programmables in situ (en anglais : « field programmable gate array »), des circuits intégrés spécifiques à un client (en anglais : « application-specific integrated circuit »), des processeurs de signaux numériques (en anglais : digital signal processor »), etc. ou des cartes électroniques rassemblant plusieurs de ces composantes. Le module de corrélation 16, le module de discrimination 18 et le module d'estimation 20 forment ensemble un module d'acquisition et de poursuite 28.

Les composantes matérielles des différents modules font partie de la plateforme matérielle du récepteur GNSS 10, qui comprend également une unité de commande centrale 30 avec un processeur et une mémoire. Les composantes matérielles des modules de traitement de signaux GNSS sont des périphériques de l'unité de commande centrale 30. Elles sont soit reliées à distance à la carte électronique de l'unité centrale soit intégrées dans celle-ci.

Le récepteur GNSS 10 peut comprendre d'autres modules qui n'exploitent pas les signaux GNSS de manière directe ou indirecte, comme p.ex. une carte graphique, un écran, un module de réseau Ethernet, un module de télécommunication sans fil (Wifi, GSM, GPRS, UMTS, etc.) ou autre. De tels modules sont appelés modules accessoires dans le cadre de cette description. Certains de ces modules peuvent être requis pour le fonctionnement de base du récepteur, d'autres assument des fonctions qui ne sont pas indispensables pour le fonctionnement de base.

L'unité de commande centrale 30 constitue le coeur du système. Elle comprend une couche matérielle 34 (processeur, mémoire et autres ressources matérielles) et une couche logicielle, dite « hyperviseur » 36 (en anglais « hypervisor »). L'hyperviseur 36 configure l'unité centrale 30 comme système partitionné spatialement et temporellement. Par partitionnement (logique), on entend dans ce contexte une subdivision des ressources matérielles en plusieurs machines ou environnements virtuels. Dans les mises en oeuvre de la présente invention, toutes les technologies de partitionnement logique ou de virtualisation appropriées peuvent être employées. De préférence, l'hyperviseur 36 met des services de paravirtualisation à disposition des partitions afin de donner à certains processus exécutés sur les partitions un accès plus direct aux ressources matérielles par l'intermédiaire d'hyper-appels (en anglais « hypercalls »).

Les modules de traitement des signaux GNSS et les modules accessoires sont désignés ensemble comme modules de la couche inférieure, l'hyperviseur 36 étant le module de la couche supérieure.

L'hyperviseur 36 est configuré pour allouer les ressources matérielles de l'unité centrale aux différents modules de la couche inférieure. En particulier, l'hyperviseur assure l'ordonnancement des processus ainsi que la gestion de la mémoire, des interruptions et de la communication inter-partitions. En outre, l'hyperviseur 36 surveille l'exécution des processus afin de détecter des états d'interblocage, des états d'instabilité du système ou d'anticiper des situations dans lesquels le fonctionnement de base du récepteur GNSS n'est plus garanti.

Comme le montre la figure 1, outre sa composante matérielle, chaque module de traitement de signaux GNSS comprend une composante logicielle, qui exécute un processus applicatif. Ces processus applicatifs servent d'interface entre la composante matérielle du module respectif et l'unité centrale, en particulier l'hyperviseur 36. Chaque processus applicatif est exécuté dans la partition respective. La composante logicielle mettant en oeuvre un processus applicatif peut être une application compilée capable d'être exécutée sur une machine à nu (en anglais : « bare machine ») ou un système d'exploitation (en temps réel ou généraliste) avec ses applications invitées (en anglais « hosted applications »). Comme les tâches des modules de traitement des signaux GNSS sont critiques dans le temps, la première alternative sera souvent la plus appropriée.

Certains modules de la couche inférieure peuvent être des modules purement logiciels. Dans ce cas, un module de la couche inférieure consiste en sa partition et les programmes y exécutables.

Au démarrage du récepteur GNSS 10, l'hyperviseur 36 est exécuté en premier lieu, dans une partition dédiée de la mémoire. L'hyperviseur initialise le matériel et charge un ou plusieurs fichiers de configuration, qui définissent des caractéristiques du fonctionnement du récepteur GNSS et qui comprennent une définition des différents modules de la couche inférieure ainsi que des ressources matérielles qui leur sont dédiées. Le ou les fichiers de configuration incluent une spécification du fonctionnement de base du récepteur que l'hyperviseur doit garantir (sauf si la configuration de base est explicitement désactivée.) La spécification du fonctionnement de base comprend, notamment, les contraintes temporelles associées aux différents processus applicatifs, la priorité des différentes tâches que le processus réalise, la structure des données, les paramètres d'exécution, etc. De préférence, la configuration de base de l'hyperviseur comprend également une spécification des données que chaque module intervenant dans le fonctionnement de base a le droit et/ou le besoin d'utiliser.

Pendant le fonctionnement du récepteur GNSS, les modules de la couche inférieure peuvent envoyer des informations sur leur état de santé à l'hyperviseur. En sus de cela, l'hyperviseur surveille les temps d'exécution des processus applicatifs en cours. En cas d'erreur non récupérable, un processus pourra être tué par l'hyperviseur.

Selon un mode de réalisation avantageux de l'hyperviseur, celui-ci surveille un ou plusieurs indicateurs de santé des processus applicatifs vitaux pour le fonctionnement de base du récepteur GNSS. Au cas où un indicateur de santé renseigne d'un risque accru de défaillance d'un processus vital, l'hyperviseur peut être configuré pour démarrer une autre instance du processus en question et la connecter aux processus applicatifs en amont et en aval avant de tuer l'instance du processus devenue instable. De cette manière, la disponibilité du récepteur GNSS est maximisée.

L'hyperviseur est programmé pour mettre à disposition des services de communication inter-partitions. Par exemple, l'hyperviseur peut implémenter des canaux de communication auxquels les partitions, respectivement les processus applicatifs tournant sur les partitions peuvent accéder en tant qu'émetteur et/ou auditeur par des points d'accès (ci-après : « ports » ou « ports de communication »). Le ou les fichiers de configuration de l'hyperviseur peuvent contenir une définition des droits d'accès des modules de traitement des signaux GNSS aux ressources de communication.

Si des modules de la couche inférieure comportent une composante matérielle, une communication directe entre les composantes matérielles est possible. De préférence, les modules de la couche inférieure sont configurés de sorte à permettre à l'hyperviseur de contrôler cette communication, en particulier de l'interrompre et/ou de la réinitialiser en cas de besoin.

Il convient de noter que les composantes logicielles des modules de la couche inférieure appartenant à des partitions différentes doivent utiliser les services de communication mis à disposition par l'hyperviseur. Une communication directe court-circuitant l'hyperviseur est empêchée par le partitionnement strict imposé par celui-ci.

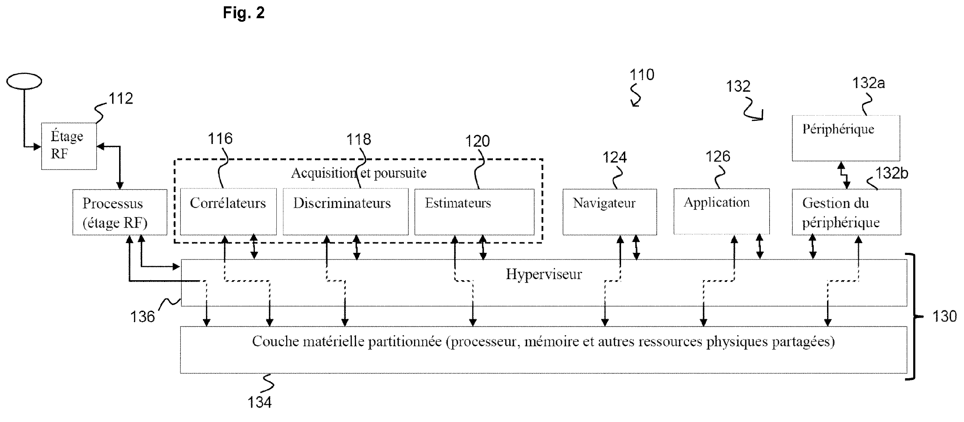

La figure 2 illustre un mode de réalisation de l'invention mettant en oeuvre un récepteur GNSS de type logiciel 110. Dans ce type de récepteur, le traitement du signal en aval du convertisseur analogique-numérique de l'étage RF 112 se fait entièrement par des modules logiciels exécutés sur un processeur à usage plus « généraliste ».

A part l'étage RF, les modules de traitement des signaux GNSS consistent en des modules logiciels qui utilisent uniquement les ressources matérielles partagées de l'unité de commande centrale 130. Les fonctions du module de corrélation 116, du module de discrimination 118, du module d'estimation 120 et du module de navigation 124 restent essentiellement les mêmes, respectivement, que dans le mode de réalisation montré à la figure 1. Dans ce type de récepteur, les boucles de poursuite de code et de porteuse sont réalisées au niveau logiciel.

Ce qui a été dit au sujet de l'hyperviseur dans le cadre de la description du mode de réalisation de la figure 1 reste d'application dans le mode de réalisation de la figure 2. On note toutefois que le ou les fichiers de configuration de l'hyperviseur 136 devront nécessairement présenter des différences par rapport à ceux de l'hyperviseur de la figure 1 à cause des différences dans la conception du système. En l'absence de composantes matérielles privatives de la plupart des modules de traitement des signaux GNSS, la quantité de calculs devant être pris en charge par l'unité de commande centrale a tendance à être plus importante dans le mode de réalisation de la figure 2. Afin de permettre aux différents modules de la couche inférieure intervenant dans le mode de fonctionnement de base du récepteur GNSS 110 d'utiliser les ressources de l'unité centrale 130 de manière efficace, l'hyperviseur 136 peut leur mettre à disposition des services de paravirtualisation.

Dans le mode de réalisation de la figure 2, tous les processus applicatifs tournant sur des partitions différentes doivent utiliser les services de communication mis à disposition par l'hyperviseur 136 pour échanger des données. Une communication directe court-circuitant l'hyperviseur est empêchée par le partitionnement strict imposé par celui-ci.

Outre les modules de traitement des signaux GNSS, la figure 2 montre des modules accessoires, en particulier un module applicatif 126, qui est un module logiciel, et un module périphérique 132, qui comprend une composante matérielle 132a et une composante logicielle 132b.

Comme dans le cas de la figure 1, l'hyperviseur 136 est configuré de sorte à garantir le fonctionnement de base du récepteur GNSS tant que la configuration de base de l'hyperviseur est en vigueur. Un avantage de l'architecture selon l'invention réside dans le fait que des modules accessoires peuvent être intégrés au récepteur, sans que le fonctionnement de base ne s'en trouve affecté.

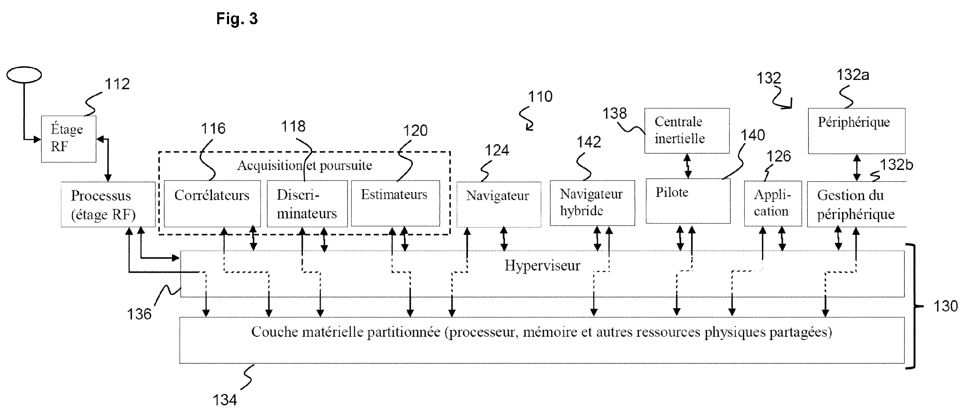

La figure 3 montre le récepteur de la figure 2 auquel on a rajouté une centrale inertielle 138 avec des capteurs (accéléromètres et gyromètres) et un logiciel pilote 140 correspondant, permettant à l'unité de commande centrale 130 d'interagir avec la centrale inertielle 138. Le récepteur 110 dispose dès lors de mesures additionnelles qui peuvent augmenter la précision de la solution de navigation, à condition de tenir compte des mesures inertielles dans le navigateur. Grâce à l'invention, il est possible d'installer un deuxième module de navigation 142 (navigateur hybride) qui tourne dans une partition séparée, parallèlement au premier module de navigation 124 et sans affecter le fonctionnement de celui-ci. Le navigateur hybride 142 est configuré pour recevoir les pseudo-distances et les valeurs Doppler des différents canaux de poursuite ainsi que les mesures inertielles de la centrale inertielle. Il implémente un filtre de Kalman étendu qui estime la position, la vitesse et le temps sur la base du jeu de mesures élargi.

Lors de l'installation du navigateur hybride 142, les informations nécessaires à son fonctionnement sont inscrites dans le ou les fichiers de configuration. La définition du fonctionnement de base du récepteur GNSS 110 n'est pas changée de ce fait, ce qui implique que l'hyperviseur 136 allouera les ressources de manière prioritaire aux modules intervenant au fonctionnement de base. Au cas où le fonctionnement nominal serait en péril, p.ex. à cause d'un dysfonctionnement dans une partie du système, l'hyperviseur 136 pourrait essayer de libérer des ressources en réduisant les ressources accordées à des processus non prioritaires, comme par exemple celui du navigateur hybride 142. Si les ressources restantes ne suffisent pas pour qu'un processus non prioritaire tourne convenablement, l'hyperviseur 136 peut le terminer. Pareillement, si le navigateur hybride 142 consommait trop de ressources ou serait instable à cause d'une erreur de programmation ou d'une mauvaise conception, l'hyperviseur 136 l'empêcherait de déstabiliser le système entier. Les mesures de protection mises en oeuvre par l'hyperviseur 142, notamment les droits limités d'accès à la mémoire partagée, empêchent également une contamination des données utilisées dans le mode de fonctionnement de base par un module accessoire.

Grâce à l'invention, il est possible de tester un logiciel, comme le navigateur hybride de l'exemple, sur une plateforme existante sans danger que celle-ci devienne instable. En particulier, il sera possible de comparer les performances d'évolutions de modules avec la version de base dans des conditions de fonctionnement réalistes.

Un autre avantage notable de l'invention réside dans la facilitation de la certification de versions évoluées d'un récepteur. Si le mode de fonctionnement de base est certifié remplir un ensemble d'exigences, il est possible d'installer des modules évolués dans le récepteur et de faire fonctionner le récepteur à l'aide des modules évolués tout en laissant l'hyperviseur surveiller si le fonctionnement satisfait aux exigences. On supposera que les modules évolués se sont révélés généralement plus performants que les modules de base, ce qui implique que les performances du récepteur devraient être améliorées. Sans l'invention, il faudrait toutefois faire certifier que le nouveau mode de fonctionnement du récepteur satisfait complètement aux exigences, ce qui peut impliquer des coûts importants. Les coûts peuvent être tels qu'il est économiquement inintéressant de mettre des évolutions d'un récepteur sur le marché. Grâce à l'invention, au cas où l'hyperviseur constate une détérioration des performances, il peut commuter le récepteur sur les modules de base, de sorte à ce que le fonctionnement de base et, par conséquent, les performances certifiés, soient garantis. La certification se trouve facilitée car la surveillance par l'hyperviseur garantit que les exigences sont remplies tout le temps.

De préférence, les modules de la couche inférieure sont enregistrés dans un ou plusieurs fichiers de configuration de l'hyperviseur. De préférence, ces fichiers comprennent une définition de chaque module et de ses paramètres de fonctionnement, p.ex. :
∘ le niveau d'importance du module pour le fonctionnement du récepteur GNSS (en particulier pour le fonctionnement de base) ;
∘ les besoins du module en termes de mémoire et de temps de calcul (s'ils sont connus à l'avance);
∘ les contraintes temps réel ;
∘ le niveau de priorité du module pour l'allocation des différentes ressources ;
∘ la spécification des données d'entrée (p.ex. format, dimension, cadences minimale et maximale) ;
∘ la spécification des données de sortie (p.ex. format, dimension, cadence minimale et maximale) ;
∘ les différents états dans lesquels le module peut se trouver (p.ex. « en cours d'exécution », « en attente de données », « désactivé », « en bonne santé », « en mauvaise santé », « corrompu », etc.) ;
∘ les ressources (matérielles et/ou logicielles) propres du module ;
∘ les ressources partagées à allouer au module par l'hyperviseur (p.ex. le ou les segments de mémoire à lui attribuer, les ports de communication, etc.) ;
∘ les procédures à appliquer en cas de défaillance du module ;
∘ etc.

Les fichiers de configuration peuvent être des fichiers XML (de l'anglais « extensible markup language », langage de balisage extensible) ou de tout autre type de fichier approprié.

De préférence, les modules de traitement des signaux GNSS sont configurés à mettre à disposition les observables suivantes :

| **Module** | **Observables (exemples, listes non exhaustive)** | |
|---|---|---|
| Étage RF | ∘ | les échantillons numériques des voies I (en phase) et Q (en quadrature de phase) |
| | ∘ | la puissance dans chaque bande de fréquences numérisée |
| Module d'acquisition | ∘ | la liste des satellites (ou pseudolites) acquis |
| | ∘ | la clé de distribution des satellites (ou pseudolites) sur les canaux de poursuite |
| | ∘ | les décalages Doppler grossiers |
| | ∘ | les retards de code grossiers |
| Corrélateurs | ∘ | les points de corrélation I_{E}, Q_{E}, Ip, Qp, IL et Q_{L} des différents canaux |
| | ∘ | |
| Discriminateurs | ∘ | erreur de code sur chaque canal |
| | ∘ | erreur de phase sur chaque canal |
| | ∘ | indicateur de convergence sur chaque canal |
| | ∘ | indicateur de poursuite ou d'accrochage des boucles sur chaque canal |
| Estimateurs | ∘ | erreur de code filtrée pour la boucle de code sur chaque canal |
| | ∘ | erreur de phase filtrée pour la boucle de porteuse sur chaque canal |
| | ∘ | pseudo-distances des différents canaux |
| | ∘ | décalages Doppler des différents canaux |
| | ∘ | mesures de phase de porteuse des différents canaux |
| | ∘ | les bruits de mesure (variances calculées sur un temps prédéfini) des différents canaux |
| | ∘ | le rapport C/N₀ (rapport signal à bruit) des différents canaux |
| Navigateur | ∘ | le message de navigation décodé |
| | ∘ | la solution de navigation (position, vitesse, temps) |
| | ∘ | l'incertitude de la solution de navigation |
| | ∘ | l'indicateur QoS (de l'anglais « quality of service, qualité du service) |
| | ∘ | les satellites (ou pseudolites) poursuivis |
| | ∘ | le nombre de satellites poursuivis |
| | ∘ | les résidus de pseudodistance |
| | ∘ | les indicateurs de qualité géométrique (GDOP, VDOP, HDOP, TDOP) |

De préférence, l'hyperviseur est configuré pour contrôler quelles données sont communiquées par les différents modules. Il peut, p.ex. empêcher un module de gaspiller des ressources par le fait de transmettre des données qui ne sont pas exploitées par d'autres modules. Si un nouveau module est installé qui a besoin de données non partagées, l'hyperviseur peut initier le partage des données requises.

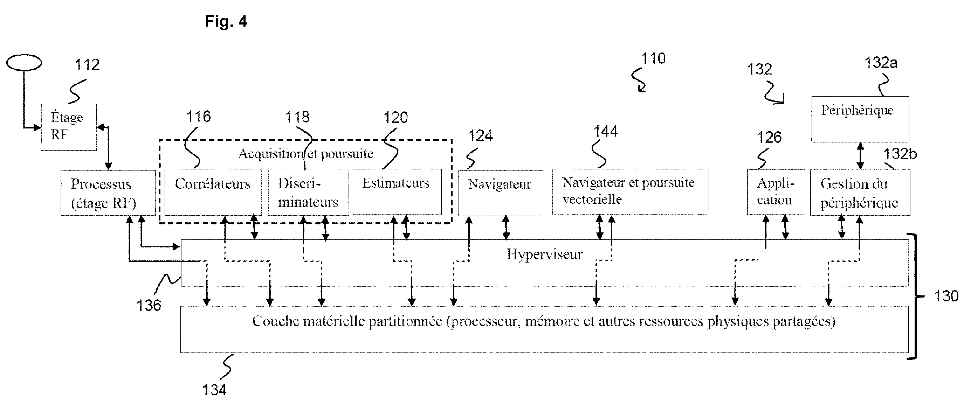

La figure 4 montre un mode de réalisation de l'invention, basé sur le mode de réalisation de la figure 2, dans lequel un module de navigation et de poursuite vectorielle 144 a été rajouté.

Comme mentionné plus haut dans le texte, dans une architecture « vectorielle », la solution de positionnement du navigateur est utilisée dans les boucles de poursuite. Un inconvénient d'une boucle vectorielle est qu'un canal de poursuite corrompu est susceptible de contaminer les autres canaux via le navigateur. Une telle contamination est exclue dans une architecture scalaire, au prix d'une moins grande disponibilité.

Le module de navigation et de poursuite vectorielle 144 prend en entrée les pseudo-distances, les décalages Doppler et les bruits de mesure (variances calculées sur un temps prédéfini) correspondants de tous les canaux de poursuite actifs. Il calcule alors non seulement la solution de navigation (position, vitesse et temps du récepteur GNSS) mais il estime également les décalages de code et/ou de phase respectifs. Le module de navigation et de poursuite vectorielle 144 est configuré pour réinjecter ces estimées dans les boucles de poursuite de code et de phase des différents canaux pour réaliser une boucle de poursuite vectorielle. Cette réinjection est de préférence réalisée canal par canal :
∘ si un canal de poursuite est en bonne santé, on le place dans le mode de poursuite scalaire ;
∘ si un canal de poursuite en mode scalaire est en mauvaise santé, on le place en mode de poursuite de code vectoriel et/ou en mode de poursuite de phase vectoriel.

Pour commuter un canal du mode scalaire en mode vectoriel, les oscillateurs à commande numérique qui contrôlent la synchronisation des répliques de code, respectivement de porteuse, de ce canal sont commandés à l'aide des estimées de décalage de code, respectivement de phase, fournies par le module de navigation et de poursuite 144.

Dans la configuration de la figure 4, la décision de savoir s'il faut mettre un canal dans le mode de poursuite scalaire ou vectoriel est prise par le module de navigation et de poursuite 144. Il est cependant possible de prévoir un ou plusieurs modules moniteurs à part qui sont spécialisés pour réaliser cette fonction.

Dans ce contexte, un canal de poursuite est considéré en bonne santé si le signal qu'il poursuit est un signal reçu d'un satellite en ligne de vue directe (un signal LOS, LOS étant l'acronyme du terme anglais « line-of-sight ») et on ne constate pas d'effet de multi-trajet (dépassant un seuil défini). Pour détecter des multi-trajets et/ou la perte du signal LOS, le module de navigation et de poursuite 144 implémente des détecteurs respectifs. (Dans des modes de réalisations alternatifs, ces détecteurs pourraient également être conçus comme des modules à part.) De préférence, le module de navigation et de poursuite 144 (ou le module moniteur) place les boucles de code et de phase de chaque canal de poursuite dans les modes scalaire ou vectoriel en respectant le tableau de décision ci-dessous :

| Signal LOS? | Multi-trajet présent? | | Boucle de code | Boucle de phase |
|---|---|---|---|---|
| Oui | Non | → | Mode scalaire | Mode scalaire |
| Non | / | → | Mode vectoriel | Mode vectoriel |
| Oui | Oui | → | Mode vectoriel | Mode scalaire |

En ce qui concerne la boucle de phase (ou boucle de porteuse), le mode vectoriel est parfois appelé « mode de fréquence aidée par le navigateur ».

S'il est spécifié dans les fichiers de configuration de l'hyperviseur que les boucles de poursuite sont commandées par les erreurs de code et de phase produites par le module d'estimation 120 dans le fonctionnement de base du récepteur, il faut remplacer la configuration de base par une configuration avancée pour permettre au module de navigation et de poursuite de prendre la commande sur la génération des répliques de code et/ou de phase. Tant que la configuration de base est inactive, le récepteur se trouve dans un mode de test ou de prototypage dans lequel le fonctionnement de base n'est pas garanti. Pour éviter de devoir désactiver la configuration de base, une solution consiste à créer des copies des modules dont le fonctionnement est modifié par un module accessoire. De cette manière les modules originaux peuvent assurer le fonctionnement de base tandis que les modules dédoublés travaillent en parallèle, sans affecter le fonctionnement de base.

Alors que des modes de réalisation particuliers viennent d'être décrits en détail, l'homme du métier appréciera que diverses modifications et alternatives à ceux-là puissent être développées à la lumière de l'enseignement global apporté par la présente divulgation de l'invention. Par conséquent, les agencements et/ou procédés spécifiques décrits ci-dedans sont censés être donnés uniquement à titre d'illustration, sans intention de limiter la portée de l'invention.

## Revendications

1. Récepteur GNSS (10), **caractérisé par**
une plateforme matérielle, sur laquelle sont implémentés :
∘ des modules de traitement de signaux GNSS (16, 18, 20, 24, 26, 28), dont au moins :
• un module d'acquisition et de poursuite (28) configuré pour l'acquisition et la poursuite de signaux GNSS, ainsi que pour la détermination de pseudo-distances à partir des signaux GNSS poursuivis ; et
• un module de navigation (24) configuré pour déterminer une solution de navigation sur la base au moins des pseudo-distances déterminées ;
∘ et un module de supervision (36), configuré pour allouer des ressources logicielles et/ou matérielles (34) aux différents modules de traitement de signaux, le module de supervision ayant une configuration de base garantissant un fonctionnement de base du récepteur GNSS du fait de l'allocation des ressources aux différents modules de traitement de signaux selon cette configuration.

2. Le récepteur GNSS (10) selon la revendication 1, **caractérisé en ce que** lesdites ressources (34) comprennent des temps de calculs, des priorités d'exécution, des puissances de calculs, des ressources de mémoire et/ou des ressources de communication.

3. Le récepteur GNSS (10) selon la revendication 1 ou 2, **caractérisé en ce que** le fonctionnement de base est un fonctionnement certifié.

4. Le récepteur GNSS (10) selon l'une quelconque des revendications 1 à 3, **caractérisé en ce que** les ressources (34) de la plateforme matérielle sont dimensionnées de sorte à permettre l'exécution de processus non requis pour le fonctionnement de base.

5. Le récepteur GNSS (10) selon l'une quelconque des revendications 1 à 4, **caractérisé en ce que** les modules de traitement de signaux comprennent au moins un module accessoire (26, 126, 132) n'intervenant pas dans le fonctionnement de base.

6. Le récepteur GNSS (10) selon la revendication 5, **caractérisé en ce qu'**au moins un des modules de traitement de signaux est configuré pour mettre à disposition de au moins un module accessoire (26, 126, 132) des résultats de calculs si cette mise à disposition est demandée ou non interdite par le module de supervision.

7. Le récepteur GNSS (10) selon la revendication 5 ou 6, **caractérisé en ce que** le module de supervision est configuré pour suspendre ou tuer un processus exécuté par un module accessoire si ce processus met en péril le fonctionnement de base du récepteur.

8. Le récepteur GNSS (10) selon l'une quelconque des revendications 1 à 7, **caractérisé en ce que** le module de supervision est un hyperviseur (36).

9. Le récepteur GNSS (10) selon l'une quelconque des revendications 1 à 7, **caractérisé en ce que** le module de supervision est un système d'exploitation temps réel.

10. Le récepteur GNSS (10) selon l'une quelconque des revendications 1 à 9, **caractérisé en ce que** les modules de traitement de signaux sont des modules logiciels.

11. Le récepteur GNSS (10) selon l'une quelconque des revendications 1 à 10, **caractérisé en ce qu'**il comprend un étage RF (12) pour transposer en fréquence et numériser une bande de fréquences comprenant les signaux GNSS à exploiter, l'étage RF (12) étant piloté sous le contrôle du module de supervision (36).

12. Le récepteur GNSS (10) selon l'une quelconque des revendications 1 à 11, **caractérisé en ce que** la configuration de base du module de supervision (36) peut être temporairement remplacée par une configuration autorisant une allocation des ressources plus libérale que la configuration de base.

13. Le récepteur GNSS (10) selon l'une quelconque des revendications 1 à 12, **caractérisé en ce que** la configuration de base est protégée contre la modification.

14. Le récepteur GNSS (10) selon l'une quelconque des revendications 1 à 13, **caractérisé en ce que** les modules de traitement de signaux intervenant dans le fonctionnement de base sont protégées contre la modification.

15. Le récepteur GNSS (10) selon l'une quelconque des revendications 1 à 14, **caractérisé en ce que** le module d'acquisition et de poursuite (28) est configuré pour poursuivre les signaux GNSS en mode scalaire et **en ce que** les modules de traitement de signaux comprennent un module de poursuite accessoire (144) configuré pour poursuivre les signaux GNSS en mode vectoriel.
